# EUROPÄISCHE PATENTSCHRIFT

(11) **EP 2 299 141 B1**
(45) Veröffentlichungstag und Bekanntmachung des Hinweises auf die Patenterteilung: **08.11.2017**
(21) Anmeldenummer: 10009923.3
(22) Anmeldetag: 20.09.2010
(51) Int. Cl.: F16D 63/00

(54) **Brems- und/oder Klemmvorrichtung mit formsteifem Zentralkörper**
Braking and/or clamping device with rigid central body
Dispositif de freinage et/ou de serrage doté d'un corps central à forme rigide

(30) Priorität: 20.09.2009 DE 102009041907
(43) Veröffentlichungstag der Anmeldung: 23.03.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 3 319 042
- DE-A1- 10 158 844
- DE-A1- 10 260 274
- DE-A1-102005 016 723
- US-B2- 7 131 518

## Beschreibung

Die Erfindung betrifft eine Brems- und/oder Klemmvorrichtung mit einem eine Führungsschiene zumindest teilweise umgreifenden Gehäuse, wobei das Gehäuse mindestens zwei über ein Schiebekeilgetriebe betätigbare Reibgehemme umfasst, die jeweils wenigstens einen an die Führungsschiene anpressbaren Reibbacken als Teil einer elastischen Klemmhülse aufweisen und wobei die Schiebekeilgetriebe zur Be- und zur Entlastung der Reibgehemme pro Be- und Entlastungsrichtung mittels mindestens einem Stellglied und/oder mittels mindestens einem Federspeicher antreibbar sind.

Aus der DE 10 2005 016 723 A1 ist eine derartige Brems- und/oder Klemmvorrichtung bekannt, bei der die Schiebekeilgetriebe sternförmig im Gehäuse um eine runde Führungsstange angeordnet sind. Die beweglichen Schiebekeile des Schiebekeilgetriebes stützen sich wälzgelagert am Gehäuse und am Reibgehemme ab. Auch sind die Schiebekeilgetriebe und die Federspeicher in Führungslängsrichtung hintereinander angeordnet.

Die DE 102 60 274 A1 beschreibt eine hydraulische Linearbremse mit einer Spannzange. Der elastische Teil der Spannzange hat eine kegelstumpfmantelförmige Hüllfläche, an der der konische Bereich der Innenwandung eines verschiebbaren Klemmkolbens anliegt. Zum Bremsen wirken auf den Klemmkolben, der in einem rohrförmigen Gehäuse längsverschiebbar gelagert ist, mehrere Tellerfedern. Zum Lösen der Bremse wird der Klemmkolben mittels eines Hydraulikkolbens gegen die Tellerfedern geschoben.

Aus der DE 101 58 844 A1 ist eine Klemmvorrichtung, bzw. Stelleinrichtung bekannt, bei der das Schiebekeilgetriebe ringförmig im Gehäuse um eine runde Führungsstange angeordnet ist. Der als Kolben ausgebildete, im Gehäuse geführte bewegliche Schiebekeil des Schiebekeilgetriebes liegt gleitgelagert an einer die Führungsstange klemmenden Klemmhülse an. Zwischen dem Kolben bzw. Schiebekeil und einem Deckel des Gehäuses sind Federpakete angeordnet.

Der vorliegenden Erfindung liegt die Problemstellung zugrunde, eine Brems- und/oder Klemmvorrichtung zu entwickeln, die bei großen Klemmkräften, kurzen Reaktionszeiten und präziser Positionierung einen einfachen und bauraumsparenden Aufbau hat und zudem dauerhaft wartungsfrei ist.

Diese Problemstellung wird mit den Merkmalen des Hauptanspruches gelöst. Dazu ist im Gehäuse ein längsverschiebbarer Zentralkörper angeordnet. Der Zentralkörper lagert Teile der Schiebekeilgetriebe und stützt die Klemmkräfte der Schiebekeilgetriebe radial ab. Auch lagert er Teile der Federspeicher.

Gemäß einem Unteranspruch werden zusätzlich die Schiebekeilgetriebe und die Federspeicher im Zentralkörper in Umfangsrichtung abwechselnd nebeneinander angeordnet. Dabei überdecken sich die Schiebekeilgetriebe und die Federspeicher in Längsrichtung zumindest bereichsweise.
Bei dieser Brems- und/oder Klemmvorrichtung wird z.B. die am Maschinentisch ortsfeste Führungsschiene, an der der die Vorrichtung tragende Schlitten abgebremst oder festgeklemmt werden soll, von einem Gehäuse in Form eines rohr- oder büchsenförmigen Körpers umgriffen. Das Gehäuse ist hierbei direkt starr am Schlitten befestigt, so dass der Bremskraftfluss den kürzest möglichen Weg zwischen Maschinenbett und Schlitten hat.
Der Zentralkörper sitzt nahezu mittig im Gehäuse. Er lagert die Schiebekeilgetriebe und die Federelemente der Federspeicher in speziellen Ausnehmungen. Die Klemmkräfte, die primär quer zur Vorrichtungslängsrichtung beim Bremsen oder Klemmen entstehen, werden vom ihm vollständig aufgenommen, so dass das Gehäuse nur noch die wesentlich kleineren Längskräfte des oder der Stellglieder und der Federspeicher abzustützen hat.

Zudem sind die die Getriebe und die Federelemente lagernden Ausnehmungen im Zentralkörper so angeordnet, dass die von der einen Seite in den Zentralkörper eingesetzten Getriebeteile die von der anderen Seite eingesteckten Federspeicherteile nicht kontaktieren, obwohl sie auf ca. der gleichen Höhe nebeneinander liegen.

Als Stellglied können u.a. pneumatische oder hydraulische Zylinder-Kolbeneinheiten, Membranzylinder, Piezostellglieder, beheiz- oder kühlbare Formgedächtniselemente sowie elektrische Antriebe mit oder ohne vorgeschaltetem Getriebe verwendet werden. Alle Stellglieder können sowohl für die Be- als auch für die Entlastungsrichtung verwendet werden. Dabei können gleich- oder verschiedenartige Stellglieder, ggf. zusammen mit einem oder mehreren Federspeichern pro Belastungsrichtung - hintereinander oder nebeneinander im oder am Gehäuse angeordnet werden.

Die Führungsschiene, an denen die Reibbacken der Vorrichtung zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden. Ferner ist die sich zwischen den Reibbacken und der Führungsschiene beim Bremsen oder Klemmen ergebende Kontaktstelle nicht auf eine Flächenberührung beschränkt, bei der das Längen-/Breitenverhältnis zur gleichen Größenordnung gehört. Ggf. sind auch Flächenberührungen denkbar, die an eine Linienberührung heranreichen.

Weitere Einzelheiten der Erfindung ergeben sich aus den Unteransprüchen und der nachfolgenden Beschreibung schematisch dargestellter Ausführungsformen.
- Figur 1:: Dimetrische Darstellung einer Brems- und/oder Klemmvorrichtung;
- Figur 2:: Explosionsdarstellung der Brems- und/oder Klemmvorrichtung;
- Figur 3:: Längsschnitt des Gehäuses im Keilgetriebebereich: oberhalb der Mittellinie ungeklemmt, unterhalb der Mittellinie geklemmt;
- Figur 4:: Längsschnitt des Gehäuses im Stellgliedbereich: oberhalb der Mittellinie ungeklemmt, unterhalb der Mittellinie geklemmt;
- Figur 5:: mittiger Querschnitt zu Figur 4;
- Figur 6:: Querschnitt im Ventilbereich des vorderen Gehäusebodens;
- Figur 6a:: Ausschnittsvergrößerung zu Figur 6;
- Figur 7:: vorderseitige dimetrische Darstellung des Zentralkörpers;
- Figur 8:: rückseitige dimetrische Darstellung des Zentralkörpers;
- Figur 9:: Dimetrische Darstellung der Klemmhülse;
- Figur 10:: Dimetrische Darstellung des Schiebekeils;
- Figur 11:: Frontansicht einer Klemmhülse mit Elastomerfedern, aufgedehnt;
- Figur 12:: wie Figur 11, jedoch nicht aufgedehnt;
- Figur 13:: Querschnitt einer unverformten Klemmhülse mit einer Ringfeder;
- Figur 14:: Teillängsschnitt zu Figur 13.

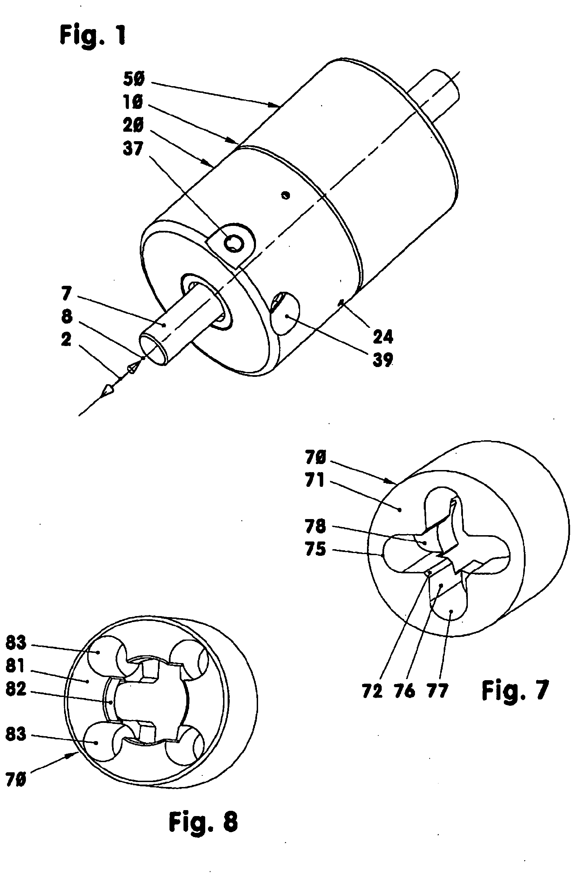

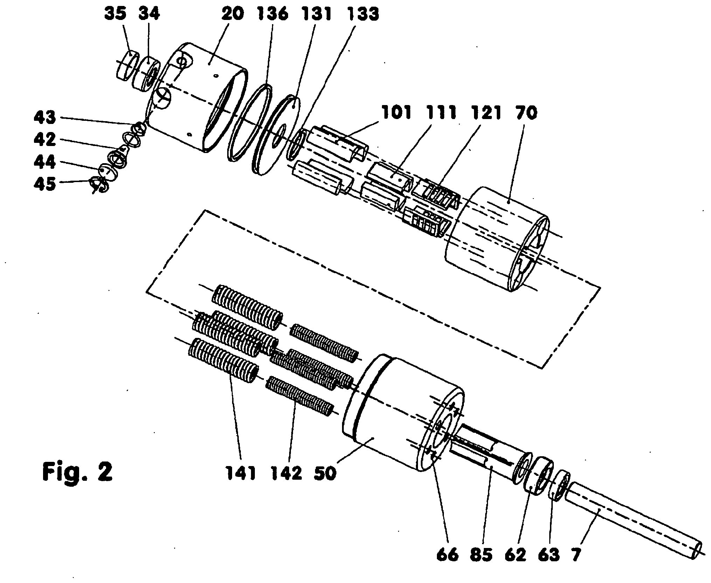

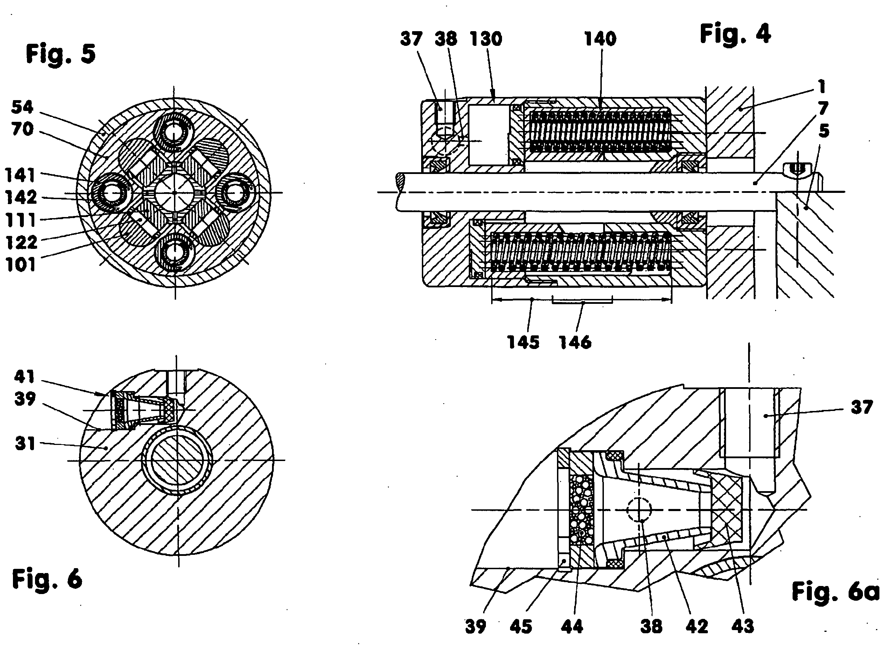

Die Figur 1 zeigt eine Brems- und/oder Klemmvorrichtung beispielsweise in ihrer Originalgröße. Das z.B. zweiteilige Gehäuse (10) der Vorrichtung umgreift eine Führungsschiene (7), die hier z.B. eine zylindrische Führungsstange ist. Das dargestellte Gehäuse (10) umfasst u.a. vier Reibgehemme (84), vier Schiebekeilgetriebe (100), ein pneumatisches Stellglied (130) und vier Federspeicher (140), vgl. Figur 2, 3 und 4. Die Vorrichtung ist über das Gehäuse (10) an einem Schlitten (1) befestigt, der an der an einem Maschinenbett (5) montierten Führungsstange (7) abgebremst oder festgeklemmt werden soll, vgl. Figur 4. Die Führungsstange (7) verläuft parallel zur Schlittenbewegungsrichtung bzw. zur Führungslängsrichtung (2).

Das z.B. quergeteilte Gehäuse (10) besteht aus zwei zumindest annähernd gleichgroßen Gehäuseteilen, einem Gehäusevorderteil (20) und einem Gehäuserückteil (50). Beide Teile (20, 50) bilden montiert einen zylinderförmigen Hohlkörper, der die Führungsstange (7) z.B. konzentrisch umgibt. Das Gehäuse (10) hat einen Durchmesser von 49 mm und eine Länge von 72 mm. Die Führungsstange (7) weist einen Durchmesser von 10 mm auf.

Ggf. kann ein Gehäuseteil (20, 50) auch nur ein Deckel sein. Ferner ist es möglich, das Gehäuse (10) ein- oder mehrfach längsgeteilt auszuführen.

Das z.B. aus einer Aluminiumlegierung gefertigte Gehäusevorderteil (20) hat die Form einer Büchse, an deren dickwandigem Boden (31) im Zentrum ein die Führungsstange (7) eng umgebender Rohrfortsatz (47) angeformt ist. Der Rohrfortsatz (47) hat eine Bohrung (21), die auch den Boden (31) durchdringt. Die Bohrung (21) hat einen Innendurchmesser, der wenige Zehntel Millimeter größer ist als der Außendurchmesser der Führungsstange (7).

An den Boden (31) des Gehäusevorderteils (20) schließt sich außen eine Zylinderwandung (22) an. Die Länge der Zylinderwandung (22) beträgt z.B. 14 mm. Die Zylinderwandung (22) überragt hierbei den Rohrfortsatz (47) z.B. um 8 mm. Zwischen der Zylinderwandung (22) und dem Rohrfortsatz (47) befindet sich der Druckraum (49) des pneumatischen Stellgliedes (130). Die Wandstärken der Zylinderwandung (22) und des Rohrfortsatzes (47) betragen jeweils z.B. 2 mm.

Im Druckraum (49) ist ein scheibenförmiger, z.B. kolbenstangenloser Kolben (131), z.B. ein Ringkolben angeordnet. Der Ringkolben (131) hat eine zentrale Bohrung (132), in der eine Ringnut zur Aufnahme eines Innendichtringes (133) angeordnet ist. Der Innendichtring (133) dichtet den Ringkolben (131) gegenüber dem Rohrfortsatz (47) ab. In der radialen Außenfläche des Ringkolbens (131) sitzt in einer Ringnut ein Außendichtring (136). Über ihn gleitet der Ringkolben (131) abgedichtet entlang der Innenfläche der Zylinderwandung (22). Der Ringkolben (131) weist zudem an seiner dem Boden (31) zugewandten Seite eine Eindrehung (135) zur verbesserten Druckluftverteilung innerhalb des Druckraumes (49) auf.

Der Ringkolben (131) hat innerhalb des Druckraumes (49) z.B. einen Hub von 10 mm.

Die Zylinderwandung (22) weist in ihrem vorderen Bereich ein Innengewinde (23) auf. Am inneren Gewindeauslauf befinden sich z.B. vier auf dem Umfang äquidistant verteilte Entlüftungsbohrungen (24). In diese Entlüftungsbohrungen (24) sind ggf. kleinere Luftfilter eingestaucht oder eingeklebt.

In der vorderen Stirnfläche (26) des Gehäusevorderteils (20) befindet sich eine Einsenkung (32), in deren äußeren Bereich z.B. ein kurzes Feingewinde (33) eingeschnitten ist. In der Einsenkung (32) sitzt eingepresst ein Stützring (34) aus Kunststoff, der im Feingewinde (33) formschlüssig verklemmt ist. Der Stützring (34) weist zur Führungsstange (7) hin einen elastischen Abstreifring (35) auf, dessen schmutzabhaltende Dichtlippe nach außen zeigt.

Der Boden (31) weist an seiner Innenseite eine kurze, zur Mittellinie (8) parallele Bohrung (38) auf, vgl. Figuren 4, 6 und 6a, die eine gestufte Abluftbohrung (39) schneidet. Die Abluftbohrung (39), in der ein Sperrventil (41) eingebaut ist, mündet in den unteren Bereich eines radial angeordneten Gewindeanschlusses (37). Über letzteren wird das pneumatische Stellglied (130) mit Druckluft versorgt.

In der Abluftbohrung (39) sitzt ein Ventilglied (43), ein mittels eines O-Ringes gegenüber dem Gehäusevorderteil (20) abgedichteter, trichterförmiger Ventilsitz (42), ein Luftfilter (44) und ein Sicherungsring (45). Das Ventilglied (43) liegt zwischen dem Gewindeanschluss (37) und dem Ventilsitz (42). Wird der Gewindeanschluss (37) mit Druckluft beaufschlagt, legt sich das Ventilglied (43) dicht am Ventilsitz (42) an, so dass die einströmende Luft zwischen der elastischen Lippe des Ventilglieds (43) und der Wandung der Abluftbohrung (39) vorbei in die nach Figur 6a hinter dem Ventilsitz (42) gelegene Bohrung (38) in den Druckraum (49) strömen kann. Bei einem Entlüften des Druckraumes (49) drückt die aus der Bohrung (38) ausströmende Abluft das Ventilglied (43) vom Ventilsitz (42). Die Abluft gelangt durch den Luftfilter (44) ins Freie.

Das z.B. aus einer Stahllegierung hergestellte Gehäuserückteil (50) hat einen, dem Gehäusevorderteil (20) vergleichbaren Aufbau. An seinem Boden (61) schließt sich außen eine Gehäusewandung (54) und innen ein konzentrisch angeordneter Rohrfortsatz (67) an. Der Boden (61) und der Rohrfortsatz (67) haben eine gemeinsame zentrale Bohrung (51), die von einer hinteren Stirnfläche (56) aus eine zentrale Zylindersenkung (52) mit Innengewinde und eine daran anschließende Kegelsenkung (53) aufweist. Die freie Vorderkante der Gehäusewandung (54) steht z.B. 20 mm über die Vorderkante des Rohrfortsatzes (67) über.

Die Gehäusewandung (54) trägt an ihrem vorderen Ende ein Außengewinde zur Verschraubung mit dem Innengewinde (23) des Gehäusevorderteils (20). Die Wandstärke der Gehäusewandung (54) beträgt z.B. 3 mm. Im Boden (61) befinden sich auf einem zur Mittellinie (8) konzentrisch gelegenen Kreis z.B. sechs Befestigungsbohrungen (66), vgl. Figur 2.

Im Freiraum zwischen der Gehäusewandung (54) und dem Rohrfortsatz (67) ist ein aus einer Stahllegierung gefertigter Zentralkörper (70) eingelegt. Dieser trommelartige Zentralkörper (70) lagert Teile der Schiebekeilgetriebe (100) und die Federspeicher (140).

Der Zentralkörper (70) ist ein aus 16 MnCr 5 hergestellter, zylindrischer Körper mit planen Stirnflächen (71, 81) und z.B. sieben Ausnehmungen (72, 75, 82, 83), vgl. u.a. die Figuren 7 und 8. Der Durchmesser seiner radialen Außenwandung ist beispielsweise wenige Zehntel Millimeter kleiner als der Innendurchmesser der Gehäusewandung (54). Von seiner vorderen Stirnfläche (71) aus sind in den Zentralkörper (70) eine zentrale Bohrung (72) und eine diese überlagernde Kreuznut (75) eingearbeitet. Die zentrale Bohrung hat einen Durchmesser von z.B. 16 mm. Die Kreuznut (75), sie stellt zwei sich senkrecht und mittig schneidende Längsnuten dar, hat eine Nutbreite von z.B. 10 mm und eine Nutlänge von z.B. 35 mm. Jeder einzelne radiale Arm der Kreuznut (75) hat eine zur Führungsschiene (7) parallele Ausnehmung (76). Letztere haben einen radialen Grund, der jeweils eine halbe, längsgeteilte Zylindermantelfläche (77) darstellt. Diese Zylindermantelflächen (77) haben einen Krümmungsradius von 5mm. Die in Führungslängsrichtung (2) gemessene Kreuznuttiefe beträgt z.B. 25 mm.

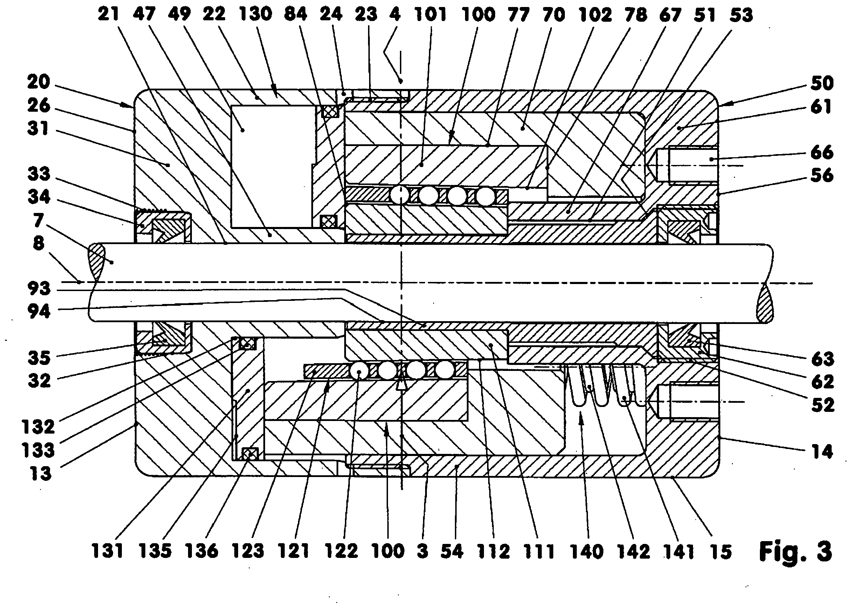

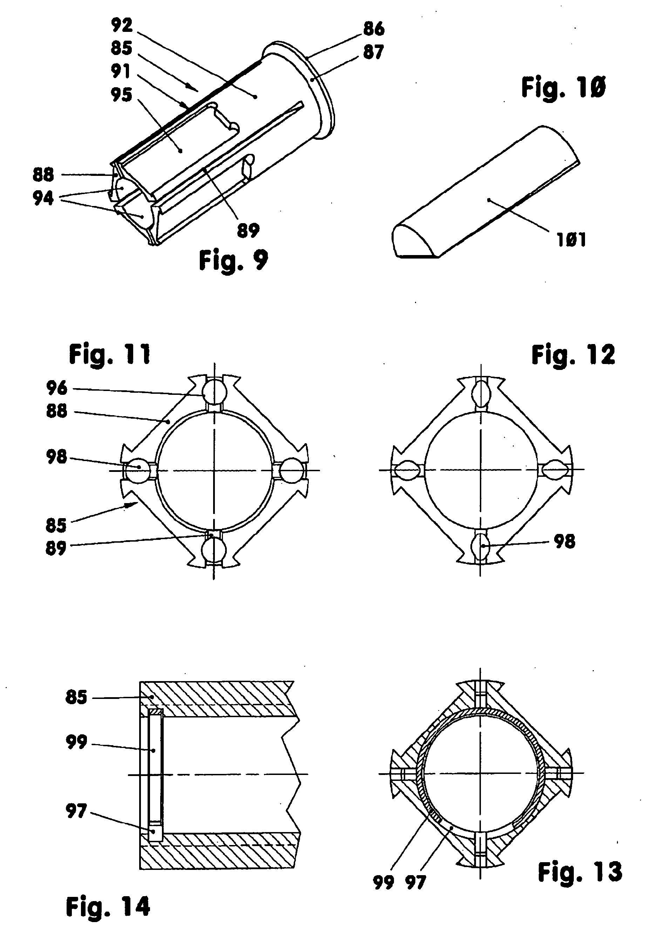

In jeder Ausnehmung (76) der Kreuznut (75) ist nach den Figuren 3 und 5 ein Schiebekeil (101) eingelegt. Der einzelne Schiebekeil (101), vgl. Figur 10, ist zumindest annähernd ein längsgeteilter Zylinder. Geometrisch setzt er sich aus einer Zylinderhälfte - also einer Hälfte eines mittig längsgeteilten Vollzylinders - und einem Keil zusammen. Dabei ist der Keil an der planen Seitenfläche, die keine Stirnfläche ist, angeformt. Die gewölbte Zylindermantelfläche des Schiebekeils (101) schmiegt sich eng an die Zylindermantelfläche (77) der Ausnehmung (76) an. Der einzelne eingelegte Schiebekeil (101) hat eine plane Keilfläche (102), die gegenüber der Mittellinie (8) gemäß dem Ausführungsbeispiel um ein Winkelgrad geneigt ist. Hierbei schneidet die Ebene der Keilfläche (102) die Mittellinie (8) außerhalb des Gehäuserückteils (50), weit hinter der Stirnfläche (56). Der Schiebekeil (101) hat an seiner kleineren Stirnseite eine 45°-Fase.

Der Schiebekeil (101) kann auch der stirnseitige Abschnitt eines Zylinderhufkörpers sein. Unabhängig hiervon ist er aus einem Werkzeugstahl, z.B. einem 90MnCrV8, gefertigt. Vor dem Schleifen der Keilfläche (102) werden die Schiebekeile (100) gehärtet. Die Härte beträgt mindestens 60 HRC.

In der hinteren Stirnfläche (81) des Zenträlkörpers (70) befindet sich eine mittige Bohrung (82), die ebenfalls koaxial zur radialen Außenwandung positioniert ist. Die Bohrung (82) hat eine Tiefe von 17,5 mm. Sie hat eine kegelige Bodenfläche. Der Kegelwinkel beträgt 118 Winkelgrade. Um die Bohrung (82) herum sind vier Führungsbohrungen (83) angeordnet. Sie haben plane, zu ihren Mittellinien normal ausgerichtete Böden und jeweils einen Durchmesser von 10,3 mm. Ihre von der Stirnfläche (81) aus gemessene Tiefe beträgt z.B. 35,5 mm. Die Mittellinien der Führungsbohrungen (83) verlaufen parallel zur Mittellinie (8). Sie liegen äquidistant verteilt auf einem Zylinder mit einem Durchmesser von 31 mm. Dadurch überschneiden sich die Führungsbohrungen (83) bereichsweise mit der zentralen Bohrung (82), vgl. Figur 8.

Die Führungsbohrungen (83) sind gegenüber der Kreuznut (75) so versetzt, dass die Mittellinien der Führungsbohrungen (83) auf den Winkelhalbierenden zwischen den Ausnehmungen (76) der Kreuznut (75) liegen, vgl. Schnitt nach Figur 5.

In der zentralen Bohrung (51) des Gehäuserückteils (50) ist eine Klemmhülse (85) angeordnet. Die Klemmhülse (85) ist im Wesentlichen ein rohrförmiger, mehrfach lärigsgeschlitzter Körper, dessen zwischen den Längsschlitzen (89) gelegene Zungen (91) im vorderen Bereich Reibbacken (93) bilden. Die einzelnen Reibbacken (93) - als Teile der Klemmhülse (85) - stellen in Verbindung mit der Führungsstange (7) mehrere, zeitgleich betätigbare Reibgehemme (84) dar.

Die Klemmhülse (85), die z.B. aus einer Aluminiumbronze gefertigt ist, hat eine durchgehende zweistufige Bohrung. Die vordere Stufe hat - bei unverformter Klemmhülse (85) - einen Innendurchmesser, der ca. ein bis zwei Zehntel größer ist als der Außendurchmesser der Führungsstange (7). Die Länge dieser Stufe entspricht ca. der halben Länge der Klemmhülse (85). Die Innenwandung dieser Stufe ist die Reibfläche (94), die bei einem Betätigen dieser Brems- und/oder Klemmvorrichtung an der Führungsstange (7) bremsend- oder klemmend angelegt wird. Ggf. ist diese Reibfläche (94) zusätzlich mit einem Reibbelag beschichtet. Die zweite Stufe der Bohrung hat einen um ca. 0,2 mm größeren Durchmesser.

Rückseitig ist die Klemmhülse (85) auf ca. einem Fünftel ihrer Länge als ungeschlitztes Rohr ausgestaltet, vgl. Figur 9. Im Bereich des dortigen Klemmhülsenendes befindet sich ein Klemmflansch (86), der mit der rückseitigen Stirnfläche der Klemmhülse (85) bündig abschließt. Sein maximaler Außendurchmesser ist z.B. 2,5 mm größer als der nächste benachbarte kleinere Klemmhülsendurchmesser. Der z.B. 2 mm breite Klemmflansch (86) trägt an seiner Vorderseite eine 1,25 x 45-Winkelgrad-Fase (87).

Die restlichen vier Fünftel der Gesamtlänge der Klemmhülse (85) sind gleichmäßig durch die vier Längsschlitze (89) aufgeteilt. Die Zungen (91) setzen sich aus den vorn gelegenen Reibbacken (93) und den zum Klemmflansch (86) hin orientierten Federabschnitten (92) zusammen. Im Bereich der Federabschnitte (92) ist die Außenwandung der Klemmhülse (85) beispielsweise zylindrisch geformt. Der dortige Außendurchmesser der unverformten Klemmhülse (85) liegt z.B. bei 20,5 mm. Im Bereich einer jeden Reibbacke (93) befindet sich in der Klemmhülse (85) ein planer, im Wesentlichen rechteckiger Druckstücksitz (95), vgl. Figur 9, der sich bis zur vorderen Stirnfläche (88) der Klemmhülse (85) erstreckt. Der Druckstücksitz (95) ist z.B. 3 mm tief in Radialrichtung in die Klemmhülse (85) eingefräst. Die Breite des Druckstücksitzes (95) beträgt 8 mm, die Länge 20 mm. Im Bereich des Druckstücksitzes (95) beträgt die kleinste Wandstärke der Klemmhülse (85) z.B. 1 mm.

Nach Figur 3 und 5 sitzen in den Druckstücksitzen (95) die Druckstücke (111). Letztere sind im Wesentlichen quaderförmige Körper mit einer jeweils rechteckigen Grundfläche. Die einzelne Grundfläche, mit der sie am Druckstücksitz (95) anliegen, hat nach den Ausführungsbeispielen die Abmessung 8 mm x 20 mm. Die der Grundfläche gegenüberliegende Druckfläche (112) ist zu dieser um z.B. ein Winkelgrad geneigt. Die Ebene der einzelnen Druckflächen (112) schneidet die Mittellinie (8) außerhalb des Gehäuses (10), ca. 530 mm hinter der hinteren Stirnfläche (56). Die mittlere Höhe der Druckstücke (111) misst ca. 3,85 mm. Die Kante zwischen der Druckfläche (112) und der größeren Druckstückstirnfläche weist eine Fase auf.

Die gehärteten und zumindest bereichsweise geschliffenen Druckstücke (111) sind aus dem gleichen Werkstoff gefertigt, aus dem auch die Schiebekeile (100) hergestellt sind.

Im ungeklemmten Zustand der Vorrichtung liegt der Zentralkörper (70) am Boden (61) des Gehäuserückteils (50) an, vgl. obere Hälften der Figuren 3 und 4. Dabei sind die einzelnen Federspeicher (140), die hier jeweils aus zwei ineinandergesteckten Schraubendruckfedern (141, 142) bestehen, komprimiert. An der vorderen Stirnfläche (71) des Zentralkörpers (70) liegt der Ringkolben (131) an. Im Druckraum (49) herrscht ein Betriebsluftdruck von 6 x 10⁵ Pa, der über die Bohrungen (38, 39) am Gewindeanschluss (37) ansteht, vgl. Figur 4 und 6a. Jeder im Zentralkörper (70) eingelegte Schiebekeil (101) liegt - durch einen Nadellagerstreifen (121) getrennt - gegenüber einem Druckstück (111). Die Keilfläche (102) des Schiebekeils (101) ist parallel ausgerichtet zur Druckfläche (112) des Druckstücks (111). Der Käfig (123) des Nadellagerstreifens (121) liegt mit einem Längsspiel von 0,1 bis 0,5 mm zwischen der freien, ebenen Stirnfläche des gehäuserückteilseitigen Rohrfortsatzes (67) und der ebenen Stirnwand des Ringkolbens (131).

Die Klemmhülse (85) sitzt axial fixiert und radial zentriert in der zentralen Bohrung (51) des Gehäuserückteils (50). Hierbei kontaktiert die Stirnfläche (88) nicht das Gehäusevorderteil (20). Zur axialen Fixierung wird die Klemmhülse (85) mit der Fase (87) ihres Klemmflansches (86) über eine Ringschraube (62) gegen die Kegelsenkung (53) der Bohrung (51) gepresst, vgl. Figur 3. Die Ringschraube (62) weist eine zur Führungsschiene (7) orientierte Ringnut auf, in der - wie im Stützring (34) - ein elastischer Abstreifring (63) angeordnet ist.

Bei betätigtem Ringkolben (131) kontaktieren die Reibbacken (93) der Klemmhülse (85) die Führungsstange (7) nicht. Die Nadeln (122) des Nadellagerstreifens (121) liegen unbelastet zwischen der Keilfläche (102) und der entsprechenden Druckfläche (112).

Sobald der Betriebsdruck am Gewindeanschluss (37) nicht mehr ansteht, öffnet die durch das Zurückfahren des Ringkolbens (131) ausgeschobene Abluft das Sperrventil (41). Die Schraubendruckfedern (141, 142) der Federspeicher (140) schieben den Zentralkörper (70) zusammen mit dem Ringkolben (131) gegen den Boden (31) des Gehäusevorderteils (20), vgl. Figuren 3 und 4, untere Hälfte. Dabei drückt der Schiebekeil (101) die Nadeln (122) der Nadellagerstreifen (121) mit zunehmender Kraft gegen die Druckstücke (111). Letztere pressen die Reibbacken (93) der Klemmhülse (85) bremsend oder klemmend gegen die Führungsstange (7). Der Zentralkörper (70) verfährt wälzgelagert und zentriert durch die Nadeln (122) entlang der sich radial zustellenden Druckstücke (111). Aufgrund dieser Zentrierung ist es also nicht zwingend notwendig, dass der Zentralkörper (70) mit seiner radialen Außenwandung eng toleriert entlang der Innenwand der Gehäusewandung (54) gleitet.

Sobald sich der Ringkolben (131) und der Zentralkörper (70) am Boden (31) abstützen, befindet sich die Vorrichtung im geklemmten Zustand. Die Käfige (123) legen sich mit ihren dem Boden (61) zugewandten Stirnflächen am Nutgrund (78) der Kreuznut (75) an.

Die Reibgehemme (84), die Schiebekeilgetriebe (100) und die Federspeicher (140) liegen innerhalb des Zentralkörpers (70) so nahe beieinander, dass die Federspeicher (140) im geklemmten und ungeklemmten Zustand die Reibgehemme (84) und das Schiebekeilgetriebe z.B. vollständig umgeben. Dabei schneidet bei geklemmten Zustand diejenige Ebene (4), vgl. Figur 3, in der die radialen Komponenten (3) der jeweils zur Punktlast zusammengefassten Klemmkräfte liegen, die aktuellen Federspeichergesamtlänge (145) beispielsweise im mittleren Drittel (146), vgl. Figur 4. Ggf. kann das mittlere Drittel (146) auf die Hälfte der Federspeichergesamtlänge (145) vergrößert werden.

Die Reibbacken (93) werden im geklemmten Zustand mit der Maximalkraft gegen die Führungsstange (7) gepresst. Es entsteht zwischen der Führungsstange (7) und dem Gehäuse (10) eine Haltekraft von mindestens 2500 N.

In einer alternativen Ausführungsvariante kann der Klemmhub pneumatisch unterstützt werden. Dazu wird der Zentralkörper (70) mit zwei Ringnuten ausgestattet. Die eine Ringnut sitzt im hin teren Bereich in der Wandung der Bohrung (72), während die andere in die radiale Außenwandung eingearbeitet ist. In jede Ringnut ist ein Dichtring eingelegt. Zudem wird im Bereich des Bodens (61) ein Gewindeanschluss angeordnet. Somit entsteht zwischen dem Boden (61) und der Stirnfläche (81) ein Druckraum.

In Figur 9 ist die Klemmhülse (85) im unverformten Zustand dargestellt. Ihr Lüftspalt gegenüber der Führungsschiene (7) ist minimal und zu dieser parallel. Ggf. wird die Klemmhülse (85) zur Erzielung eines größeren Lüftspalts im geschlitzten Bereich unter plastischer Verformung aufgedehnt, vgl. Figur 3, ober Hälfte. In der Folge federn die zwischen den Längsschlitzen (89) gelegenen Zungen (91) einige Zehntel Millimeter trichterförmig auf. Auf diese Weise werden auch bei gelöster Klemmung die Druckstücke (111) und die Nadellagerstreifen (121) mit relativ geringer Kraft spielfrei gegen die Schiebekeile (101) gedrückt.

Die Figuren 11 bis 14 zeigen zwei modifizierte Klemmhülsen (85), bei denen das Auffedern der Zungen (91) nicht durch innere Kräfte, sondern mittels zusätzlicher Hilfsmittel erreicht wird. Nach Figur 11 werden die Längsschlitze (89) einer Klemmhülse (85), die im unverformten Zustand nur ein Lüftspalt von z.B. maximal 0,1 mm hat, bei aufgespreizten Zungen (91) von der Stirnfläche (88) aus z.B. 5 bis 15 mm aufgebohrt. In diese Schlitzausnehmungen bzw. Bohrungen (96) werden zylindrische Gummizapfen (98) eingesteckt und ggf. festgeklebt. Somit werden die Zungen (91) dauerhaft elastisch aufgefedert.

Beim Klemmen der Vorrichtung werden die Gummielemente (98) reversibel komprimiert und auch teilweise elastisch in die Längsschlitze (89) verdrängt, vgl. Figur 12.

Alternativ hierzu können die Gummielemente (98) durch eine Ringfeder (99) ersetzt werden, vgl. Figuren 13 und 14. Die Ringfeder (99) ist eine zum offenen Ring geformte Blattfeder. Um sie in die Klemmhülse (85) einbauen zu können, wird in die zentrale Klemmhülsenbohrung in der Nähe der Stirnfläche (88) eine Innenringnut (97) eingearbeitet.

### Bezugszeichenliste:

- 1: Schlitten
- 2: Führungslängsrichtung, Schlittenbewegung
- 3: radiale Komponente der Klemmkraft
- 4: Ebene der radialen Klemmkraftkomponenten
- 5: Maschinenbett
- 7: Führungsschiene, Führungsstange
- 8: Mittellinie

- 10: Gehäuse
- 13: Stirnfläche, vorn
- 14: Stirnfläche, hinten
- 15: Außenwandung, zylindrisch

- 20: Gehäusevorderteil, Gehäuseteil
- 21: Bohrung, zentral
- 22: Zylinderwandung
- 23: Innengewinde
- 24: Entlüftungsbohrungen
- 26: Stirnfläche, vorn

- 31: Boden, vorn
- 32: Einsenkung
- 33: Feingewinde
- 34: Stützring
- 35: Abstreifring

- 37: Gewindeanschluss
- 38: Bohrung im Boden
- 39: Abluftbohrung
- 41: Sperrventil
- 42: Ventilsitz
- 43: Ventilglied
- 44: Luftfilter
- 45: Sicherungsring

- 47: Rohrfortsatz, vorn
- 49: Druckraum

- 50: Gehäuserückteil, Gehäuseteil
- 51: Bohrung, zentral
- 52: Zylindersenkung
- 53: Kegelsenkung
- 54: Gehäusewandung
- 56: Stirnfläche, hinten

- 61: Boden, hinten
- 62: Ringschraube
- 63: Abstreifring

- 66: Befestigungsbohrungen
- 67: Rohrfortsatz, hinten

- 70: Zentralkörper, Trommel
- 71: Stirnfläche, vorn
- 72: Bohrung, zentral; Ausnehmung
- 75: Kreuznut, Ausnehmung
- 76: Ausnehmungen, vier
- 77: Zylindermantelfläche, Nutausrundung
- 78: Nutgrund

- 81: Stirnfläche, hinten
- 82: Bohrung, zentral; Ausnehmung
- 83: Führungsbohrungen, Ausnehmungen

- 84: Reibgehemme
- 85: Klemmhülse
- 86: Klemmflansch
- 87: Fase
- 88: Stirnfläche, vorn
- 89: Längsschlitze

- 91: Zungen
- 92: Federabschnitte
- 93: Reibbacken
- 94: Reibfläche
- 95: Druckstücksitz
- 96: Schlitzausnehmungen, Bohrungen
- 97: Innenringnut
- 98: Gummizapfen, Gummielemente, Elastomerzapfen
- 99: Ringfeder, flachkant gebogen

- 100: Schiebekeilgetriebe
- 101: Schiebekeil
- 102: Keilfläche

- 111: Druckstück
- 112: Druckfläche

- 121: Nadellagerstreifen, Nadellager
- 122: Nadeln
- 123: Nadelkäfig

- 130: Stellglied, pneumatisch
- 131: Ringkolben, Kolben
- 132: Bohrung, zentral
- 133: Innendichtring
- 135: Eindrehung
- 136: Außendichtring

- 140: Federspeicher
- 141: Federelement, Schraubendruckfeder, groß
- 142: Federelement, Schraubendruckfeder, klein
- 145: Federspeichergesamtlänge
- 146: mittleres Drittel von (145)

## Patentansprüche

1. Brems- und/oder Klemmvorrichtung mit einem eine Führungsschiene (7) zumindest teilweise umgreifenden Gehäuse (10), wobei das Gehäuse (10) mindestens zwei über ein Schiebekeilgetriebe (100) betätigbare Reibgehemme (84) umfasst, die jeweils wenigstens einen an die Führungsschiene (7) anpressbaren Reibbacken (93) als Teil einer elastischen Klemmhülse (85) aufweisen und wobei die Schiebekeilgetriebe (100) zur Be- und zur Entlastung der Reibgehemme (84) in Be- und Entlastungsrichtung antreibbar sind,
und wobei die Schiebekeilgetriebe (100) in einer der Richtungen mittels mindestens einem Stellglied (130) und in der anderen der Richtungen mittels mindestens einem Federspeicher (140) antreibbar sind,
**dadurch gekennzeichnet,**
- **dass** im Gehäuse (10) ein Zentralkörper (70) längsverschiebbar angeordnet ist,
- **dass** der Zentralkörper (70) Teile (101, 121) der Schiebekeilgetriebe (100) lagert und die Klemmkräfte der Schiebekeilgetriebe (100) radial abstützt und
- **dass** der Zentralkörper (70) Teile (141, 142) des mindestens einen Federspeichers (140) lagert.

2. Vorrichtung nach Anspruch 1, dadurch gekenntzeichnet, dass im Gehäuse (10) die Klemmhülse (85) axial spielfrei angeordnet ist.

3. Vorrichtung nach Anspruch 1, **dadurch gekennzeichnet, dass** die Schiebekeilgetriebe (100) und die Federspeicher (140) im Zentralkörper (70) - in Umfangsrichtung - zumindest bereichsweise abwechselnd nebeneinander in Umfangsrichtung angeordnet sind.

4. Vorrichtung nach Anspruch 1, **dadurch gekennzeichnet, dass** - in geklemmtem Zustand - die radialen Komponenten (3) der Klemmkräfte der Schiebekeilgetriebe (100) in einer Ebene (4) liegen, die die Federspeicher (140) im mittleren Drittel (146) ihrer aktuellen Federspeichergesamtlänge (145) quer schneiden.

5. Vorrichtung nach Anspruch 1, **dadurch gekennzeichnet, dass** jedes Schiebekeilgetriebe (100) aus einem Schiebekeil (101), einem Nadellager (121) und einem Druckstück (111) besteht.

6. Vorrichtung nach Anspruch 5, **dadurch gekennzeichnet, dass** die Schiebekeile (101) und die Druckstücke (111) einen Schiebekeilwinkel von 0,75 bis 1,5 Winkelgraden haben.

7. Vorrichtung nach mindestens einem der vorangegangenen Ansprüche 1, **dadurch gekennzeichnet, dass** der Zentralkörper (70) zur Mittellinie (8) der Führungsschiene (7) parallele Ausnehmungen (76) aufweist, deren radialer Grund jeweils eine halbe, längsgeteile Zylindermantelfläche (77) aufweist, wobei an jeder der halben Zylindermantelflächen (77) ein Schiebekeil (101) mit einer entsprechenden gewölbten Schmiegefläche anliegt.

8. Vorrichtung nach Anspruch 5, **dadurch gekennzeichnet, dass** der einzelne Schiebekeil (101) sich geometrisch aus einer Zylinderhälfte und einem Keil zusammensetzt, wobei der Keil an der planen Seitenfläche, die keine Stirnfläche ist, angeformt ist.

9. Vorrichtung nach Anspruch 1, **dadurch gekennzeichnet, dass** der Zentralkörper (70) über die Schiebekeilgetriebe (100) an der Klemmhülse (85) zentriert anliegt.

10. Vorrichtung nach Anspruch 1, **dadurch gekennzeichnet, dass** vier Schiebekeilgetriebe (100) um die Klemmhülse (85) herum angeordnet sind.

11. Vorrichtung nach Anspruch 1, **dadurch gekennzeichnet, dass** das der Entlastung der Reibgehemme (84) dienende Stellglied (130) mindestens eine pneumatische Zylinder-Kolbeneinheit (22, 131) umfasst.

12. Vorrichtung nach Anspruch 1, **dadurch gekennzeichnet, dass**
- Schiebekeilgetriebe (100) und Federspeicher (140) im Zentralkörper (70) in Umfangsrichtung abwechselnd nebeneinander angeordnet sind und sich dabei in Längsrichtung zumindest bereichsweise überdecken.

## Claims

1. A braking and/or clamping apparatus comprising a housing (10) at least partly surrounding a guide rail (7), said housing (10) comprising a least two frictional restraining mechanisms (84) each actuatable via a shifting-wedge-type transmission (100) and including at least one friction jaw adapted to be urged against the guide rail (7) as part of a resilient clamping sleeve (85), said shifting-wedge-type transmissions (100) adapted to be driven in loading and relief directions for loading and relieving said frictional restraining mechanisms (84), and said shifting-wedge-type transmissions (100) being adapted to be driven in one of said directions by an actuating member (130) and in the other one of said directions by spring storage means (140), **characterized in that**
- housing (10) has a central body (70) disposed therein in a longitudinally displaceable relationship,
- the central body (70) mounts parts (101, 121) of shifting-wedge-type transmissions (100) and radially supports the clamping forces of the shifting-wedge-type transmissions (100), and
- the central body (70) mounts parts (141, 142) of said at least one spring storage means (140).

2. Apparatus as claimed in claim 1, **characterized in that** the housing (10) has the clamping sleeve (85) disposed therein in an axially non-playing relationship.

3. Apparatus as claim in claim 1, **characterized in that** the shifting-wedge-type transmissions (100) and the spring storage means (140) are disposed in the central body (70) to alternate at least in a section-wise manner in a circumferentially side-by-side relationship.

4. Apparatus as claimed in claim 1, **characterized in that** in the clamped condition the radial components (3) of the clamping forces of the shifting-wedge-type transmissions (100) extend in a plane (4) transversely intersected by spring storage means (140) within the central third (146) of the actual length (145) of said spring storage means.

5. Apparatus as claimed in claim 1, **characterized in that** the shifting-wedge-type transmissions (100) each consist of a shifting wedge (101), a needle bearing (121) and a pressing member (111).

6. Apparatus as claimed in claim 5, **characterized in that** the shifting wedges (101) and the pressing members (111) each comprise a shifting wedge angle of 0.75 to 1.5 angular degrees.

7. Apparatus as claimed in at least one of the preceding claims, **characterized in that** the central body (70) has therein cavities (76) extending in parallel with the central line (8) of the guide rail (7), with the radial bottom of said cavities each comprising one half of a longitudinally divided external cylinder surface (77) and each of said one-half cylinder surfaces (77) engaged by a shifting wedge (101) at a correspondingly curved contact surface thereof.

8. Apparatus as claimed in claim 5, **characterized in that** each individual shifting wedge (101) is composed geometrically of one half of a cylinder and a wedge element, said wedge element formed integral with the planar lateral surface which is no end face.

9. Apparatus as claimed in claim 1, **characterized in that** the central body (70) engages the clamping sleeve (85) in a centered relationship through the shifting-wedge-type transmissions (100).

10. Apparatus as claimed in claim 1, **characterized by** four shifting-wedge-type transmissions (100) distributed around clamping sleeve (85).

11. Apparatus as claimed in claim 1, **characterized in that** the actuating member (130) serving to relieve frictional restraining means (84) comprises at least one pneumatic piston-cylinder unit (22, 131).

12. Apparatus as claimed in claim 1, **characterized in that** the shifting-wedge-type transmissions (100) and the spring storage means (140) are disposed inside the central body (70) in a circumferentially alternating side-by-side relationship to coextend longitudinally in an at least section-wide manner.

## Revendications

1. Dispositif de freinage et/ou de serrage comportant un carter (10) qui entoure au moins partiellement un rail de guidage (7), le carter (10) comprenant au moins deux dispositifs de ralentissement par friction (84) pouvant être actionnés par un engrenage à clavette coulissante (100) présentant chacun au moins un patin de friction (93) comme élément d'une douille de serrage élastique (85) qui peut être pressé contre le rail de guidage (7) et les engrenages à clavette coulissante (100) pouvant être entraînés dans la direction de chargement et de déchargement pour le chargement et le déchargement des dispositifs de ralentissement par friction (84) et les engrenages à clavette coulissante (100) pouvant être entraînés dans une des directions à l'aide d'au moins un actionneur (130) et dans la direction opposée à l'aide d'au moins un élément à ressort (140),
**caractérisé en ce**
- **qu'**un corps central (70) est disposé dans le carter (10) de manière déplaçable dans la direction longitudinale,
- **que** le corps central (70) loge des éléments (101, 121) des engrenages à clavette coulissante (100) et soutient radialement les forces de serrage des engrenages à clavette coulissante (100) et
- **que** le corps central (70) loge des éléments (141, 142) d'au moins un accumulateur à ressort.

2. Dispositif selon la revendication 1, **caractérisé en ce que** la douille de serrage (85) est disposée dans le carter (10) sans jeu axial.

3. Dispositif selon les revendications 1, **caractérisé en ce que** les engrenages à clavette coulissante (100) et les accumulateurs à ressort (140) dans le corps central (70) sont disposés au moins par endroits alternativement côte à côte dans la direction circonférentielle.

4. Dispositif selon la revendication 1, **caractérisé en ce que** les composantes radiales (3) des forces de serrage des engrenages à clavette coulissante (100), à l'état serré, se situent dans un plan (4) qui coupe les accumulateurs à ressort (140) transversalement au niveau du tiers médian (146) de leur longueur totale actuelle (145).

5. Dispositif selon la revendication 1, **caractérisé en ce que** chaque engrenage à clavette coulissante (100) est composé d'une clavette coulissante (101), d'un roulement à aiguilles (121) et d'un élément de pression (111).

6. Dispositif selon la revendication 5, **caractérisé en ce que** les clavettes coulissantes (101) et les éléments de pression (111) forment un angle de coin entre 0,75 et 1,5 degré.

7. Dispositif selon au moins une des revendications mentionnées ci-devant, **caractérisé en ce que** le corps central (70) présente des évidements parallèles (76) par rapport à l'axe central (8) du rail de guidage (7), le fond de chaque évidement ayant la forme de la surface de la moitié d'un cylindre divisé longitudinalement (77), une clavette coulissante (101) comportant une surface incurvée de manière correspondante s'appliquant contre chaque surface de la moitié d'un cylindre (77).

8. Dispositif selon la revendication 5, **caractérisé en ce que** chaque clavette coulissante (101) se compose géométriquement d'un demi-cylindre et d'un coin, le coin étant monté sur la surface latérale plane qui n'est pas une surface frontale.

9. Dispositif selon la revendication 1, **caractérisé en ce que** le corps central (70) est placé de manière centrée contre la douille de serrage (85) par l'intermédiaire des engrenages à clavette coulissante (100).

10. Dispositif selon la revendication 1, **caractérisé en ce que** quatre engrenages à clavette coulissante (100) sont disposés autour de la douille de serrage (85).

11. Dispositif selon la revendication 1, **caractérisé en ce que** l'actionneur (130) qui sert au déchargement des dispositifs de ralentissement par friction (84) comporte au moins une unité cylindre-piston pneumatique (22, 131).

12. Dispositif selon la revendication 1, **caractérisé en ce que** dans le corps central (70) des engrenages à clavette coulissante (100) et des accumulateurs à ressort (140) sont disposés, dans la direction de la circonférence, côte à côte en alternance et se superposent au moins par endroits dans la direction longitudinale.
